Europäisches Patentamt

European Patent Office

Office européen des brevets

(19)

(11) Publication number: **0 257 902 B1**

# EUROPEAN PATENT SPECIFICATION

(12)

(45) Date of publication of patent specification: **28.10.92**  (51) Int. Cl.⁵: **G02F 1/133, B23K 26/00**

(21) Application number: **87307065.0**

(22) Date of filing: **10.08.87**

(54) **Liquid crystal device and method of manufacturing the same.**

(30) Priority: **08.08.86 JP 186201/86**

(43) Date of publication of application:
**02.03.88 Bulletin 88/09**

(45) Publication of the grant of the patent:
**28.10.92 Bulletin 92/44**

(84) Designated Contracting States:
**DE FR GB**

(56) References cited:
EP-A- 0 013 875      EP-A- 0 017 240
EP-A- 0 072 658      DE-A- 2 538 212
DE-A- 2 658 682      DE-A- 3 039 713
US-A- 3 911 444      US-A- 4 081 653

K. TRADOWSKY "Laser", edition 4, 1983
Vogel-Bucherverlag, Würzburg, DE; pages
109-115

AMERICA JOURNAL OF OPTHALMOLOGY,vol.
96, July-December 1983; S. SRINIVASAN et
al.:"Excimer Laser Surgery of the Cornea"
pages 710-715

(73) Proprietor: **SEMICONDUCTOR ENERGY LAB-
ORATORY CO., LTD.**
**398 Hase**
**Atsugi-shi Kanagawa-ken, 243(JP)**

(72) Inventor: **Yamazaki, Shunpei**
**21-21 Kitakarasuyama 7-Chome Setagaya-Ku
Tokyo, 157(JP)**
Inventor: **Mase, Akira**
**Terrace Hase 3-3 381-1, Atsugi-Shi
Kanagawa-Ken, 243(JP)**
Inventor: **Sakayori, Hiroyuki**
**Sanyu Bldg. 203 4-18-3, Haramachida
Machida-Shi Tokyo, 194(JP)**

(74) Representative: **Abbie, Andrew Kenneth et al
R.G.C. Jenkins & Co. 26 Caxton Street
London SW1H 0RJ(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 257 902 B1

## Description

### FIELD OF THE INVENTION

This invention relates to liquid crystal devices and methods of manufacturing the same, and is particularly concerned with the electrode arrangements of such devices.

Liquid crystal devices, as known for example from DE-A-2538212 or DE-A-3039713, have been utilized as displays in microcomputers, word processors, television sets and so forth. Such a display commonly comprises a pair of substrates with a liquid crystal layer therebetween, and an electrode arrangement for applying an electric field to the liquid crystal layer. The electrode arrangement is divided into a plurality of sections by means of which pixels of the display are defined. With a suitable voltage applied to a particular section of the electrode arrangement, a corresponding portion of the liquid crystal layer is subjected to an electric field and in correspondence with the direction of the electric field or whether or not the voltage is applied, the liquid crystal changes its optical characteristics and an image or character is displayed.

The electrode arrangement may for example comprise a plurality of first electrode strips arranged in the X direction on the inside surface of one substrate, and a plurality of second electrode strips arranged in the orthogonal Y direction on the opposed inside surface of the other substrate. The strips are commonly formed by photolithography using masks and photoresist techniques. Even if the pattern of the electrodes is comparatively simple, the photoetching has to be carried out with special accuracy. Because of this the lithography process requires many steps and the price of the liquid crystal display is correspondingly increased.

To avoid the shortcomings of photolithographic methods of electrode formation, the applicant has proposed an improved process in which a laser beam having a linear cross section is directed onto a transparent electrically conductive film provided on a substrate surface but not extending to its periphery. The irradiated linear portions of the film are removed by vaporization, so that the remaining conductive film portions define electrodes or leads. By use of this process, the multiple steps required in order to form the electrodes by photolithography, namely a coating step, a prebaking step, an exposure step, a developing step, a postbaking step, an etching step and a step of removing the coated photoresist, are dispensed with.

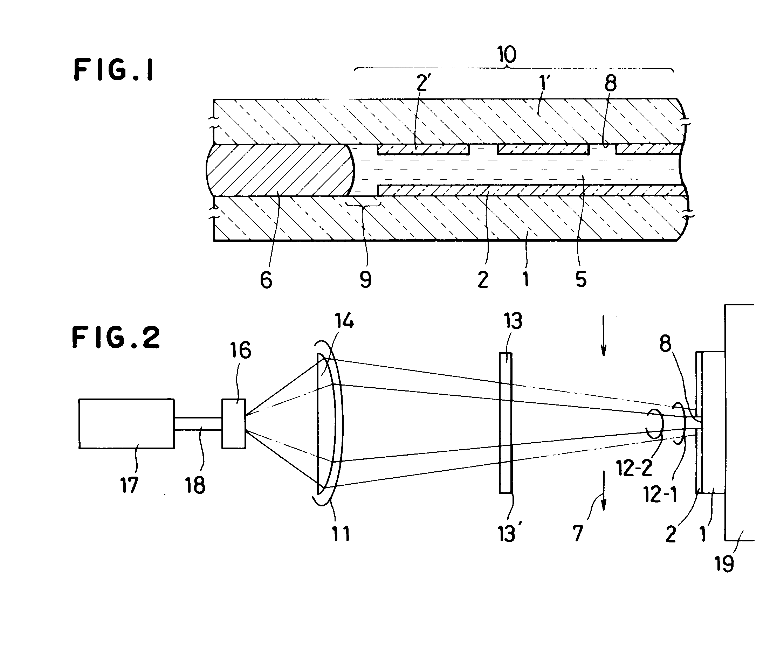

Irrespective of how the electrodes are formed, it is required in accordance with the prior art to mate a pair of substrates and to form electrode pads with high special accuracy, while preparing a connection area for an external flexible connector of a PCB (printed circuit board). For this reason, a special margin has conventionally been provided adjacent to the sealed edge of a liquid crystal display as will be described with reference to Fig. 1 of the accompanying drawings.

Fig. 1 is a cross-sectional view showing a prior art liquid crystal display. The liquid crystal device is provided with a plurality of first electrode strips 2' extending in the direction perpendicular to the drawing sheet, a plurality of second electrode strips 2 extending in the lateral direction in the plane of the drawing sheet, and a liquid crystal layer 5 disposed between a pair of substrates 1 and 1'. Between the electrode arrangement 2 and 2' and a resin sealing member 6 provided at the edge of the display device, a margin 9 is provided so that the sealing member 6 does not extend on to the electrode strips 2 and 2'. If the member 6 were to partially overlie the electrode strips, liquid crystal material would be prevented from reaching a corresponding portion of the panel and therefore the corresponding portion of the display would not work. The width of the margin 9 may be e.g., about 3 to 5 mm. The margin 9, however, has no display function in the finished product and merely increases the size of the display device in comparison with the net displaying area of the liquid crystal panel.

Furthermore, since the electrode strips of the external flexible connector are spaced apart from each other by distances of only about several hundred micrometers, the two substrates of a liquid crystal display have to be mated with each other with high skill and particular care. This makes the product expensive also due to decreased yield in manufacture.

### OBJECTS AND SUMMARY OF THE INVENTION

In order to overcome or at least substantially reduce the abovementioned disadvantages of the prior art, the present invention provides in one of its aspects a method of manufacturing a liquid crystal display device, said method comprising sealing liquid crystal material within a cell defined by first and second substrates having opposed surfaces spaced apart from each other, respective pluralities of spaced apart elongate electrodes being provided on each of said opposed surfaces and the electrodes of one of said surfaces being directed transversely with respect to the electrodes of the other of said surfaces for defining display pixels at the crossing locations of the respective pluralities of electrodes, as known for example from DE-A-2538212, the method being characterized in that sealing is effected with a material which is interposed between the opposed surfaces of the substrates at the peripheral edges of the display device and overlies some of the electrodes throughout their length, and such overlaid electrodes are not utilized for the definition of display pixels.

In accordance with a second aspect, the present invention provides a liquid crystal display device comprising liquid crystal material sealed within a cell defined by first and second substrates having opposed surfaces spaced apart from each other, respective pluralities of spaced apart elongate electrodes being provided on each of said opposed surfaces and the electrodes of one of said surfaces being directed transversely with respect to the electrodes of the other of said surfaces for defining display pixels at the crossing locations of the respective pluralities of electrodes, and peripheral circuitry connected to said electrodes, also as known from DE-A-2538212, the device being characterized in that a sealing material interposed between the opposed surfaces of the substrates at the peripheral edges of the display device overlies some of the electrodes throughout their length, and such overlaid electrodes are not utilized for the definition of display pixels and have no connection to said peripheral circuitry.

Described hereinafter is a preferred embodiment of the present invention in which elongate electrode strips are formed on first and second substrate surfaces by the scribing of conductive layers provided thereon utilizing an excimer laser. The substrates are then juxtaposed with the electrodes on one substrate surface extending in a first X direction and the electrodes on the other substrate surface extending in a transverse Y direction, the space between the substrate surfaces is filled with liquid crystal material, and the periphery of the thus defined liquid crystal device is sealed with an organic resin material which intrudes between the substrate surfaces and overlies some of the electrodes at the peripheries of the device throughout their length. In the practice of the present invention no effort is made to limit the intrusion of the sealing resin material onto the electrodes and no special spacing is provided in the arrangement of the electrodes to distance the display area from the sealing material; rather the practice of the present invention is to provide electrodes on the substrates throughout the width thereof, to take no special steps to align the two substrates with each other in a predetermined arrangement, and to determine in the finished device which electrodes are capable of forming display pixels and to utilize only those electrodes in the formation of a display, such determination excluding from the display area electrodes that are overlaid throughout their length by the sealing material. By this means the invention secures significant cost advantages as compared with the prior art.

Further features of the invention are set forth with particularity in the appended claims and will be well understood from consideration of the following description of exemplary embodiments given with reference to the accompanying drawings.

BRIEF DESCRIPTION OF THE DRAWINGS

Fig. 1 is a cross sectional view showing a prior art liquid crystal device;
Fig. 2 is a diagram illustrating the manufacture of a liquid crystal device in accordance with the present invention;
Figs. 3(A) to 3(E) are explanatory diagrams showing cross sections of laser beams; and
Fig. 4(A) to 4(D) are partial views showing an exemplary liquid crystal display device in accordance with the present invention.

DETAILED DESCRIPTION OF THE PREFERRED EMBODIMENT

Referring to Fig. 2, the patterning of an electrode arrangement in accordance with the present invention is explained. A substrate 1, e.g. a glass substrate, having a transparent electrically conductive film 2 (e.g. made of $SnO_2$ (Eg. = 3.5eV), formed on one surface thereof is mounted on a base 19. Opposing the substrate 1, an optical system is arranged approximately on a line normal to the surface of the substrate to be processed. The substrate is irradiated with a laser beam of 248 nm wavelength and 5.0 eV photon energy which is emitted by an excimer laser 17 using KrF (distributed by Questec Inc.), the laser beam being expanded in one direction of means of an expander 16, contracted through a convex cylindrical lens 14 made of artificial quartz, and shaped through a mask 13. The laser beam has a generally rectangular cross section when emitted by an excimer laser. Assuming the efficiency to be 3%, the energy of the laser beam from the laser 17 is 350 mJ/sec. The mask is made of a quartz pane whose rear surface is partially coated with obturating material to form a slit through which the laser beam can be shaped. The obturating material is preferably a heat resistant material such as chromium, $MoSi_2$ or the like. The laser beam as first generated has a rectangular section of 16 nm x 300 nm, and is expanded to 16 mm x 300 mm by means of the convex lens 14. The power density of the laser beam on the convex lens 14 is $7.3 \times 10^{-2} mJ/mm^2$. Because the optical energy gap is 5.0 eV, the transparent film 2 can sufficiently absorb the photon energy and be selectively removed.

The laser beam in passing through the convex lens is converged to such a degree that, if it were not for the mask 13, the shorter side length of the rectangular cross section of the beam would be 100 μm at the substrate 1. By means of the mask 13, the laser beam is shaped to have a rectangular cross section at the substrate which is 30 cm long and 20 μm wide. The laser beam is radiated intermittently with a pulse width of 20 nano-seconds at from 1 to 100 Hz, e.g. 10 Hz. After irradiation with the pulsed beam, the irradiated portions of the transparent film 2 are made chalky white the formed into a fine powder which can be removed by ultrasonic cleaning (at a frequency of e.g. 29 KHz) of the substrate for from 1 to 10 minutes in an aqueous solution of acetone. According to experimental observation, no damage was caused to the underlying substrate by this process.

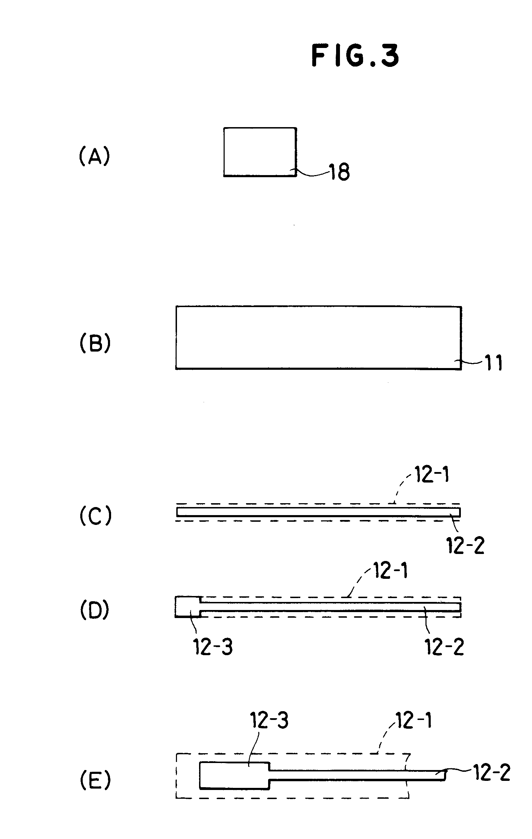

Referring to Figs. 3(A) to 3(E), the shaping of the laser beam will now be further explained. The laser beam emitted from the laser has a rectangular cross section as shown in Fig. 3(A) and is expanded in a lateral direction as shown in Fig. 3-(B). The periphery 12-1 of the expanded laser beam is obturated by the mask 13 so as to obtain the desired cross section 12-2 according to which the conductive film is patterned, as shown in Fig. 3(C). The width of the laser beam 12-1 impinging on the mask 13 is 100 μm and the mask reduces the width of the laser beam 12-2 to 20 μm. The laser beam can alternatively be shaped as shown in Fig. 3(D) by not masking the beam at a position corresponding to one end thereof, and a similar configuration of laser beam can also be obtained by obturating the complete perimeter of the expanded laser beam as shown in Fig. 3(E). Fig. 3-(E) is drawn to an enlarged scale as compared with Figs. 3(C) and 3(D).

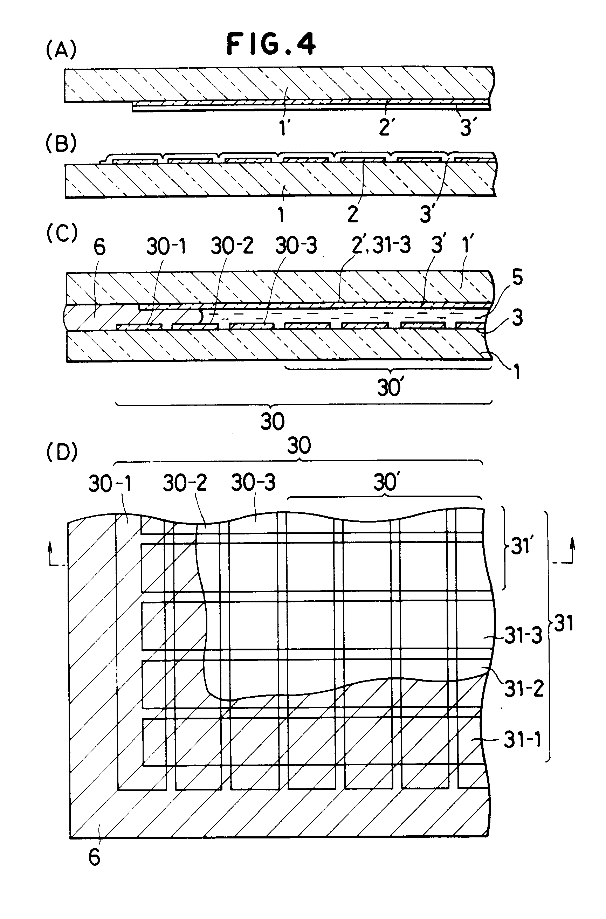

Referring to Figs. 4(A) to 4(D), an exemplary liquid crystal display device according to the invention is illustrated. In the figures, the liquid crystal display device comprises a pair of glass substrates 1 and 1′, a plurality of first electrode strips 2′ extending in the X direction and spaced apart from each other in the Y direction, a plurality of second electrode strips 2 extending in the Y direction and spaced apart from each other in the X direction, oriented polarizing films 3 and 3′ provided on the inside surfaces of the substrates, a liquid crystal layer 5, and an organic resin seal 6. The electrode strips 2 and 2′ are formed on the substrates 1 and 1′ respectively as shown in Fig. 4(A) and 4(B) by repeatedly making use of a pulsed laser as explained in conjunction with Figs. 3(A) to 3(E). The substrates 1 and 1′ are joined in such a manner that the seal 6 covers the peripheral part of the electrode arrangement 2 and 2′ as shown in Fig. 4-(C). In this figure, the second electrode strip 30-3 and the first electrode strip 31-3 can be marginal, serving the same purpose of the margin 9 in Fig. 1, so that the effective electrode strips of the display are those designated 30′ and 31′ in Fig. 4(D). Because of inaccurate connection of the electrode strips with a peripheral circuit, the first electrode strip 31-3 and the second electrode strip 30-3 may not be operative in the display. However, the number of such inoperative electrode strips may be greater or alternatively there may be no inoperative strips. In either case the present invention makes it unnecessary to join the substrates in exact coincidence. Because of this, the display can be manufactured at low cost and by means of a simpler manufacturing process.

While the present invention has been described in conjunction with a preferred embodiment, it is to be well understood that the invention is not limited to the particular example described herein and many modifications and variations may occur to those skilled in the art without departure from the scope of the invention as defined in the appended claims. For example, although the embodiment is provided with a pair of transparent substrates, one of the first and second sets of electrode strips could be formed so as to be reflective while the other set of electrode strips are transparent. In this case, the liquid crystal display device would require only one polarizing plate and therefore the device can be less costly. Further, colour filters can be provided for the liquid crystal device to form a colour display.

## Claims

1. A method of manufacturing a liquid crystal display device, said method comprising sealing liquid crystal material within a cell defined by first and second substrates (1, 1') having opposed surfaces spaced apart from each other, respective pluralities of spaced apart elongate electrodes (2, 2') being provided on each of said opposed surfaces and the electrodes of one of said surfaces being directed transversely with respect to the electrodes of the other of said surfaces for defining display pixels at the crossing locations of the respective pluralities of electrodes, the method being characterized in that sealing is effected with a material (6) which is interposed between the opposed surfaces of the substrates (1, 1') at the peripheral edges of the display device and overlies some of the electrodes (30-1, 30-2; 31-1, 31-2) throughout their length, and such overlaid electrodes (30-1, 30-2; 31-1, 31-2) are not utilized for the definition of display pixels.

2. A method as claimed in claim 1 wherein additionally, at each periphery of the display device, at least one electrode (30-3, 31-3) that is not overlaid by sealing material (6) and that is adjacent to an overlaid electrode (30-2, 31-2) is not utilized for the definition of display pixels.

3. A method as claimed in claim 1 or 2 wherein said sealing material (6) comprises an organic resin.

4. A method as claimed in any preceding claim wherein the electrodes (2, 2') are formed by laser scribing of electrically conductive layers provided on the opposed surfaces of said substrates (1, 1').

5. A method as claimed in claim 4 wherein the laser scribing is effected by means of an excimer laser.

6. A method as claimed in claim 5 wherein the laser beam from the excimer laser is first expanded and then passed through a cylindrical lens to obtain a scanning beam of predetermined rectangular beam cross-section.

7. A method as claimed in claim 6 wherein the laser scribing is implemented by use of a mask provided in the path of the laser beam.

8. A liquid crystal display device comprising liquid crystal material sealed within a cell defined by first and second substrates (1, 1') having opposed surfaces spaced apart from each other, respective pluralities of spaced apart elongate electrodes (2, 2') being provided on each of said opposed surfaces and the electrodes of one of said surfaces being directed transversely with respect to the electrodes of the other of said surfaces for defining display pixels at the crossing locations of the respective pluralities of electrodes, and peripheral circuitry connected to said electrodes, characterized in that a sealing material (6) interposed between the opposed surfaces of the substrates (1, 1') at the peripheral edges of the display device overlies some of the electrodes (30-1, 30-2; 31-1, 31-2) throughout their length, and such overlaid electrodes (30-1, 30-2; 31-1, 31-2) are not utilized for the definition of display pixels and have no connection to said peripheral circuitry.

**Patentansprüche**

1. Verfahren zum Herstellen einer Flüssigkristall-Anzeigevorrichtung, bei dem ein Flüssigkristallmaterial innerhalb einer Zelle abgedichtet wird, die durch ein erstes und zweites Substrat (1, 1') festgelegt ist, und deren einander gegenüberstehende Oberflächen voneinander beabstandet sind, jeweils mehrere voneinander beabstandete langgestreckte Elektroden (2, 2') auf jeder der beiden gegenüberstehenden Flächen aufgebracht werden, wobei die Elektroden auf einer der Oberflächen quer in bezug auf die Elektroden auf der anderen Oberfläche aufgebracht werden, um Anzeigepixel an den Überkreuzungsstellen der jeweiligen mehreren Elektroden festzulegen, welches Verfahren **dadurch gekennzeichnet** ist, daß das Abdichten mit einem Material (6) erfolgt, das zwischen die einander gegenüberstehenden Oberflächen der Substrate (1, 1') entlang den Umfangskanten der Anzeigevorrichtung eingefügt wird und einige der Elektroden (30-1, 30-2; 31-1, 31-2) über ihre gesamte Länge abdeckt, und daß derartige abgedeckte Elektroden (30-1, 30-2; 31-1, 31-2) nicht zum Festlegen von Anzeigepixeln verwendet werden.

2. Verfahren nach Anspruch 1, bei dem zusätzlich an jedem Rand der Anzeigevorrichtung mindestens eine Elektrode (30-3, 31-3), die nicht vom Abdichtmaterial (6) abgedeckt wird und neben einer abgedeckten Elektrode (30-2, 31-2) liegt, nicht zum Festlegen von Anzeigepixeln verwendet wird.

3. Verfahren nach einem der Ansprüche 1 oder 2, bei dem das Abdichtmaterial (6) einen Kunststoff aufweist.

4. Verfahren nach einem der vorstehenden Ansprüche, bei dem Elektroden (2, 2') durch Laserschreiben elektrisch leitender Schichten hergestellt werden, die auf den einander gegenüberstehenden Oberflächen der Substrate (1, 1') aufgebracht sind.

5. Verfahren nach Anspruch 4, bei dem das Laserschreiben mit Hilfe eines Excimerlasers erfolgt.

6. Verfahren nach Anspruch 5, bei dem der Laserstrahl vom Excimerlaser zunächst aufgeweitet und dann durch eine Zylinderlinse geführt wird, um einen Abtaststrahl mit vorgegebenem rechteckigen Strahlquerschnitt zu erhalten.

7. Verfahren nach Anspruch 6, bei dem das Laserschreiben mit Hilfe einer Maske realisiert wird, die im Weg des Laserstrahls angeordnet wird.

8. Flüssigkristall-Anzeigevorrichtung mit einem Flüssigkristallmaterial, das innerhalb einer Zelle abgedichtet ist, die durch ein erstes und ein zweites Substrat (1, 1') festgelegt wird, deren einander gegenüberstehende Oberflächen voneinander beabstandet sind, wobei jeweils mehrere voneinander beabstandete langgestreckte Elektroden (2, 2') auf jeder der einander gegenüberstehenden Oberfläche angebracht sind, wobei die Elektroden auf einer der Oberflächen quer in bezug auf die Elektroden auf der anderen der Oberflächen angebracht sind, um Anzeigepixel an den Überkreuzungsstellen der jeweils mehreren Elektroden festzulegen, und mit einem peripheren Schaltungssystem, das an die Elektroden angeschlossen ist, **dadurch gekennzeichnet,** daß ein Abdichtmaterial (6), das zwischen die einander gegenüberstehenden Oberflächen der Substrate (1, 1') an den Umfangsrändern der Anzeigevorrichtung eingefügt ist, einige der Elektroden (30-1, 30-2; 31-1, 31-2) über ihre ganze Länge abdeckt, und daß derartige abgedeckte Elektroden (30-1, 30-2; 31-1, 31-2) nicht zum Festlegen von Anzeigepixeln verwendet werden und keinen Anschluß an das periphere Schaltsystem aufweisen.

**Revendications**

1. Procédé de fabrication d'un dispositif d'affichage à cristaux liquides, ledit procédé consistant à sceller une matière de cristal liquide à l'intérieur d'une cellule définie par de premier et second substrats (1, 1') ayant des surfaces opposées présentant un espace entre elles, des multiplicités respectives d'électrodes allongées présentant un espace entre elles (2, 2') étant prévues sur chacune desdites surfaces opposées et les électrodes de l'une desdites surfaces étant orientées transversalement par rapport aux électrodes de l'autre desdites surfaces pour définir des pixels d'affichage au niveau des emplacements de croisement des multiplicités respectives d'électrodes, le procédé étant caractérisé en ce que le scellement est effectué à l'aide d'une matière (6) qui est intercalée entre les surfaces opposées des substrats (1, 1') au niveau des bords périphériques du dispositif d'affichage et qui recouvre certaines des électrodes (30-1, 30-2; 31-1, 31-2) sur toute leur longueur, et en ce que lesdites électrodes recouvertes (30-1, 30-2; 31-1, 31-2) ne sont pas utilisées pour la définition des pixels d'affichage.

2. Procédé selon la revendication 1, dans lequel, en outre, au niveau de chaque périphérie du dispositif d'affichage, au moins une électrode (30-3, 31-3) qui n'est pas recouverte par ladite matière de scellement (6) et qui est adjacente à une électrode recouverte (30-2, 31-2) n'est

pas utilisée pour la définition des pixels d'affichage.

3. Procédé selon la revendication 1 ou la revendication 2, dans lequel ladite matière de scellement (6) comprend une résine organique.

4. Procédé selon l'une quelconque des revendications précédentes, dans lequel les électrodes (2, 2') sont formées par incision au laser de couches électriquement conductrices prévues sur les surfaces opposées desdits substrats (1, 1').

5. Procédé selon la revendication 4, dans lequel l'incision au laser est effectuée à l'aide d'un laser excimer.

6. Procédé selon la revendication 5, dans lequel le faisceau laser en provenance du laser excimer est tout d'abord dilaté, puis dirigé à travers une lentille cylindrique pour obtenir un faisceau de balayage ayant une section transversale rectangulaire prédéterminée.

7. Procédé selon la revendication 6, dans lequel l'incision au laser est mise en oeuvre à l'aide d'un masque prévu dans le trajet du faisceau laser.

8. Dispositif d'affichage à cristaux liquides comprenant une matière de cristal liquide scellée à l'intérieur d'une cellule définie par de premier et second substrats (1, 1') ayant des surfaces opposées présentant un espace entre elles, des multiplicités respectives d'électrodes allongées présentant un espace entre elles (2, 2') étant prévues sur chacune desdites surfaces opposées et les électrodes de l'une desdites surfaces étant orientées transversalement par rapport aux électrodes de l'autre desdites surfaces pour définir des pixels d'affichage au niveau des emplacements de croisement des multiplicités respectives d'électrodes, et un circuit périphérique relié auxdites électrodes, caractérisé en ce qu'une matière de scellement (6) intercalée entre les surfaces opposées des substrats (1, 1') au niveau des bords périphériques du dispositif d'affichage recouvre certaines des électrodes (30-1, 30-2; 31-1, 31-2) sur toute leur longueur, et en ce que ces électrodes recouvertes (30-1, 30-2; 31-1, 31-2) ne sont pas utilisées pour la définition des pixels d'affichage et ne sont pas reliées audit circuit périphérique.

FIG.1

FIG.2

EP 0 257 902 B1

# FIG.3

(A)

18

(B)

11

(C)

12-1

12-2

(D)

12-1

12-3

12-2

(E)

12-3

12-1

12-2

# FIG.4

(A)

(B)

(C)

(D)